# FASCICULE DE BREVET EUROPEEN

(11) **EP 1 081 023 B1**
(45) Date de publication et mention de la délivrance du brevet: **23.07.2003**
(21) Numéro de dépôt: 00402387.5
(22) Date de dépôt: 29.08.2000
(51) Int. Cl.: B62D 21/15

(54) **Structure avant de véhicule automobile et véhicule automobile équipé de cette structure**
Vorderes Tragwerk für ein Kraftfahrzeug und Kraftfahrzeug mit solchem Tragwerk
Front structure of a motor car and motor car equipped with this structure

(30) Priorité: 02.09.1999 FR 9911019
(43) Date de publication de la demande: 07.03.2001
(73) Titulaire: Peugeot Citroen Automobiles SA, 92200 Neuilly sur Seine (FR)
(72) Inventeur: Blanquet, Bertrand, 25200 Montbeliard (FR)
(74) Mandataire: Berger, Helmut

(56) Documents cités:
- US-A- 5 477 938

## Description

La présente invention concerne une structure avant de véhicule automobile à traction avant et un véhicule équipée de cette structure.

On connaît du document US-A-5 477 938 une structure selon le préambule de la revendication 1.

Par berceau court, on comprendra dans l'ensemble de la description un berceau écarté longitudinalement du groupe moto-propulseur.

Une telle structure présente de nombreux inconvénients, notamment lors d'un choc avant.

En effet, en cas de choc avant, le véhicule entre en contact avec l'obstacle par l'intermédiaire de la partie avant des longerons.

Ceux-ci sont donc soumis à des efforts importants qui les déforment vers l'arrière du véhicule. Si le choc est très important, la déformation des longerons est telle que le groupe moto-propulseur vient en contact avec l'obstacle. Le groupe moto-propulseur étant fixé, à sa partie haute, sur la partie avant des longerons et les efforts portant sur la partie basse du groupe moto-propulseur, ce dernier bascule vers l'arrière du véhicule autour de ses attaches de fixation sur les longerons.

Le groupe moto-propulseur remonte alors au-dessus du berceau, car celui-ci est court et ne bloque donc pas le mouvement du groupe moto-propulseur. Ceci provoque l'intrusion de pièces dans l'habitacle du véhicule, ce qui est dangereux pour les passagers.

L'invention a pour but d'éliminer ces inconvénients en proposant une structure avant de véhicule automobile qui présente une capacité d'absorption des chocs élevée, qui permet de préserver l'intégrité de l'habitacle du véhicule, dans le cas d'un choc frontal, en limitant le risque de basculement du groupe moto-propulseur, et qui permet d'utiliser des groupes moto-propulseur classiques, sans modification.

Ainsi, l'invention concerne une structure avant de véhicule automobile selon la revendication 1.

De préférence, cette barre comporte sur sa face arrière une partie formant nez, destinée à venir en contact avec le berceau.

Pour certains types de groupe moto-propulseur, la barre présente avantageusement un profil légèrement courbé pour faciliter son introduction sur le groupe moto-propulseur, avant son montage sur celui-ci.

La partie du berceau en vis-à-vis de la barre est avantageusement renforcée, pour éviter une trop grande détérioration du berceau en cas de choc, et transmettre à ce dernier une partie de l'énergie du choc.

De préférence, les attaches du groupe moto-propulseur sont fixées sur les extrémités avant des longerons par l'intermédiaire de cales élastiques.

Dans un mode particulier de réalisation, cette barre comporte des moyens de fixation sur la boîte de vitesses et éventuellement des pions de centrage sur le moteur.

Enfin, l'invention concerne également un véhicule automobile équipé d'une structure avant conforme à l'une quelconque des caractéristiques mentionnées ci-dessus.

L'invention sera mieux comprise, et d'autres buts, avantages et caractéristiques de celle-ci apparaîtront plus clairement à la lecture de la description qui suit d'un exemple de réalisation de la structure avant selon l'invention, cette description étant faite en référence aux dessins annexés.
La figure 1 est une vue schématique en élévation latérale et en coupe de la structure avant de l'invention selon la ligne I-I de la figure 2.
La figure 2 est une vue schématique de dessus de la structure avant de l'invention.
La figure 3 est une vue schématique en perspective selon la flèche III-III de la figure 1.
La figure 4 est une vue en perspective de la barre de la structure avant selon l'invention.
La figure 5 est une vue schématique partielle et en élévation latérale de la structure avant de l'invention, montrant le trajet des efforts en cas de choc.
La figure 6 est une vue schématique partielle et de dessus de la structure avant de l'invention, montrant également le trajet des efforts en cas de choc.
La figure 7 est une vue schématique partielle en élévation latérale de la structure avant de l'invention, après un choc avant.
La figure 8 est une vue schématique partielle de dessus de la structure avant de l'invention, après un choc avant.

Les éléments communs aux différentes figures seront désignés par les mêmes références.

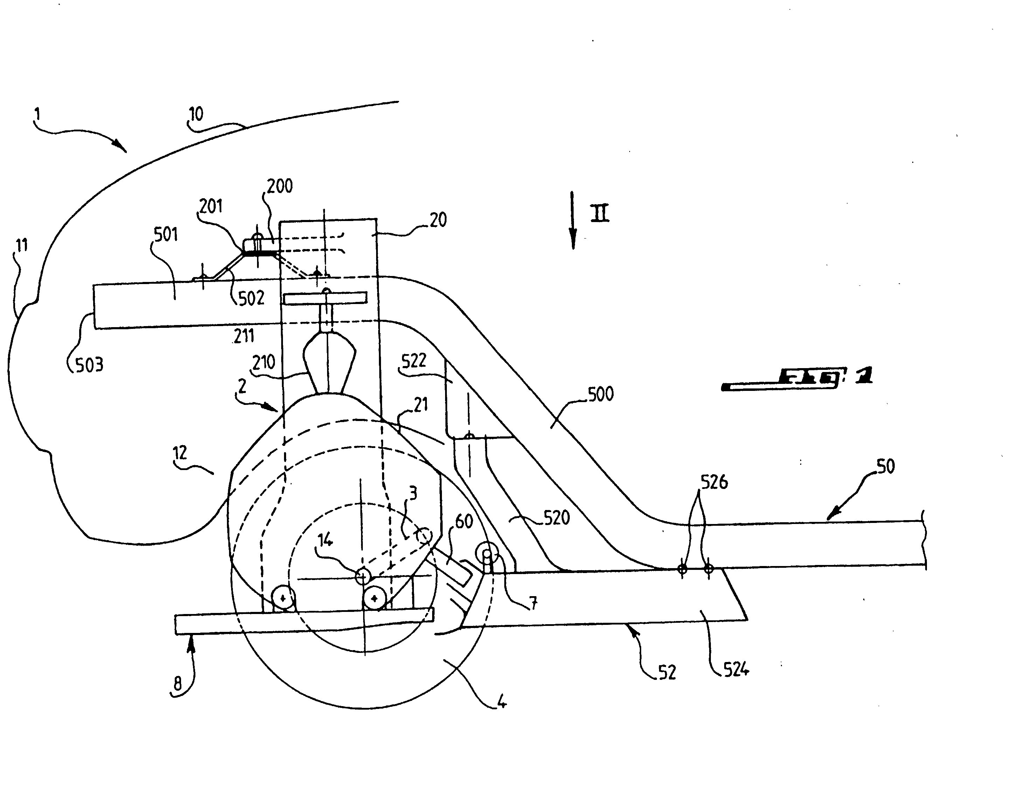

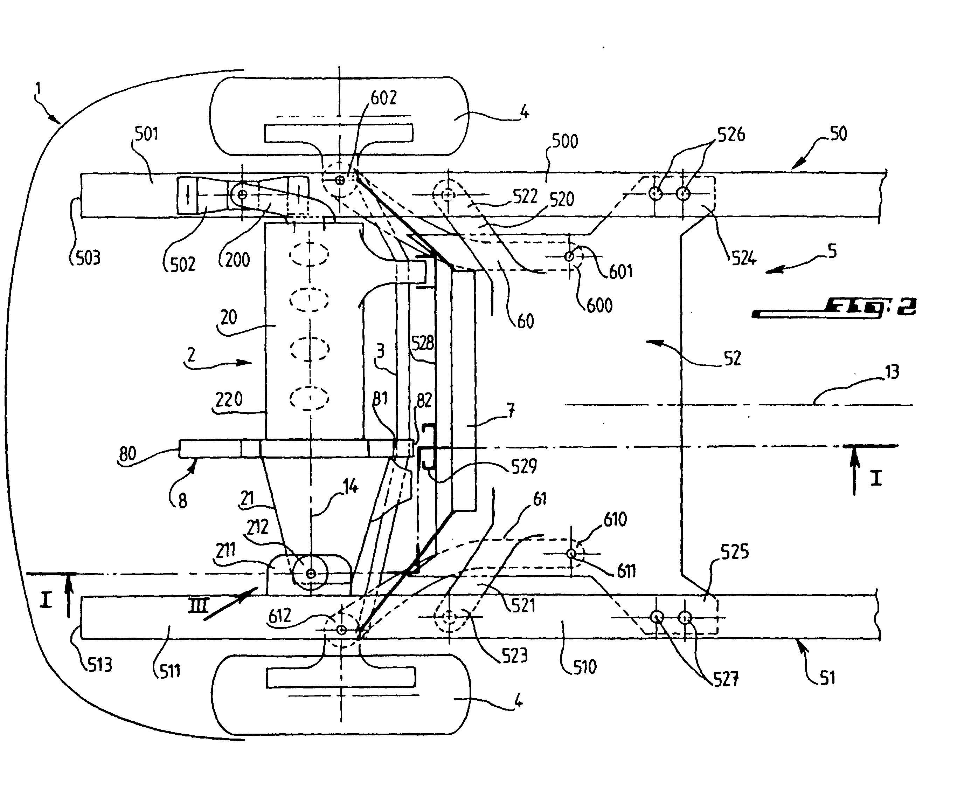

Dans l'exemple de réalisation illustré aux figures 1 et 2, la structure avant de l'invention est montée sur un véhicule automobile 1 qui comporte un capot 10, un parechoc avant 11 et une aile avant 12.

Le véhicule 1 comporte également un groupe moto-propulseur 2, composé d'un moteur 20 et d'une boîte de vitesses 21.

Le moteur 20 est relié par une transmission 3 à des paliers (non représentés) de support de roue 4.

La structure avant comporte également un brancard 5 qui est constitué de deux longerons 50 et 51 symétriques par rapport au plan médian 13 du véhicule 1 et reliés par un berceau court 52.

Chacun des longerons comporte une extrémité avant courbée et relevée, composée d'un élément 500, 510 incliné vers le capot 10 du véhicule et d'une portion droite 510, 511 qui prolonge l'élément incliné et qui est sensiblement parallèle au reste du longeron 50, 51.

La partie arrière de chaque longeron passe sous la carcasse de l'habitacle du véhicule.

Le groupe moto-propulseur est fixé sur l'extrémité avant des longerons 50 et 51 et plus particulièrement sur les portions droites 501 et 511.

Ainsi, le moteur 20 comporte, du côté du longeron droit 50, une attache de fixation 200 qui est fixée par l'intermédiaire d'une cale élastique 201 sur un élément de support 502 fixé sur la portion 501 du longeron 50.

Par ailleurs, la boîte de vitesses 21 comporte, du côté du longeron gauche 51, une attache 210 qui est reliée à la portion 511 du longeron gauche 51 par l'intermédiaire d'une pièce de support 211, communément appelée chaise de structure, et d'une cale élastique 212.

Cette pièce de support 211 est ici rendue nécessaire, du fait que la boîte de vitesses 21 est située plus bas que le moteur 20.

Ainsi, le groupe moto-propulseur 2 s'étend transversalement par rapport au véhicule selon l'axe 14, et donc perpendiculairement au plan médian 13 du véhicule, en étant fixé dans sa partie haute aux deux longerons 50 et 51.

Le berceau 52 comporte, vers l'avant du véhicule et sur chacun de ses côtés longitudinaux, une pièce 520, 521 communément appelée corne de berceau.

Ces deux pièces 520 et 521 s'étendent vers le haut depuis le berceau 52 et leur extrémité 522, 523, opposée au berceau 52 est raccordée à la partie inclinée 500, 510 de chaque longeron 50, 51.

Par ailleurs, du côté arrière et également sur ses côtés longitudinaux, le berceau 52 comporte deux prolongements 524, 525 qui sont destinés à être fixés sous le longeron 50, 51 par tout moyen approprié 526, 527.

La suspension comporte deux triangles de suspension 60, 61 qui sont, par une de leurs extrémités 600, 610, fixées au berceau 52 par tout moyen approprié 601, 611 et, par leur extrémité opposée 602, 612, sont articulées par rapport à une roue 4.

La structure avant selon l'invention comporte une crémaillère de direction 7 qui est également supportée par le berceau 52.

La structure avant selon l'invention comprend également une barre 8 qui s'étend longitudinalement, sensiblement parallèle aux longerons 50 et 51.

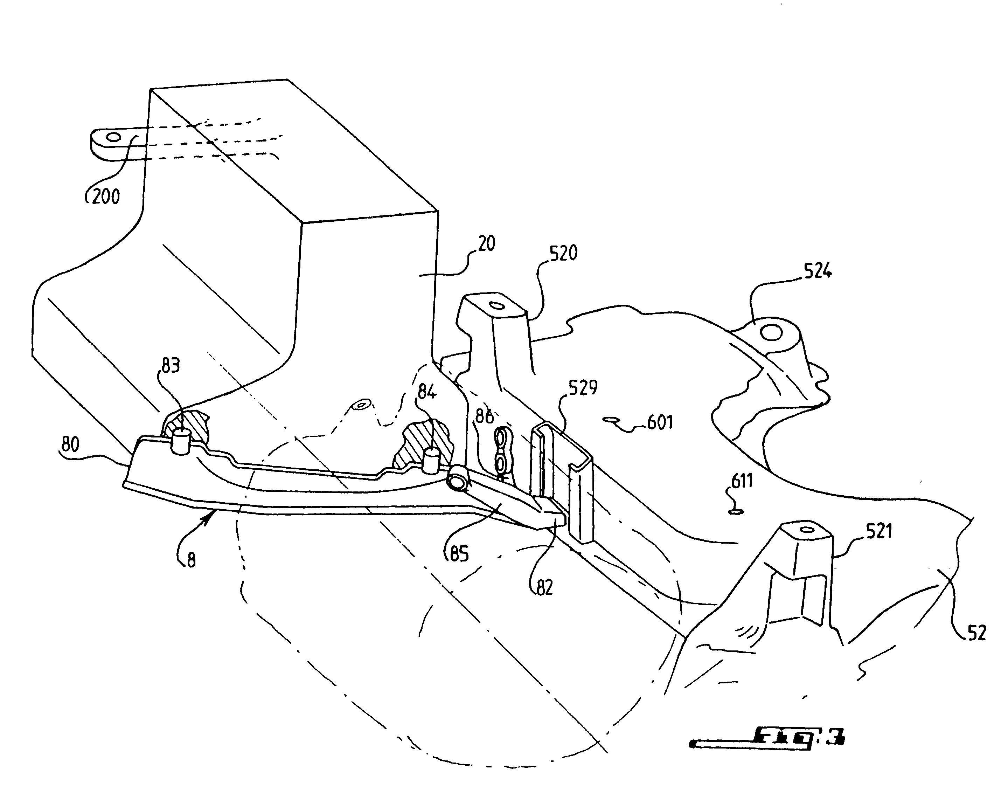

On pourra également se reporter à la figure 3 qui illustre les positions respectives du moteur 20, de la boîte de vitesses 21, du berceau 52 et de la barre 8.

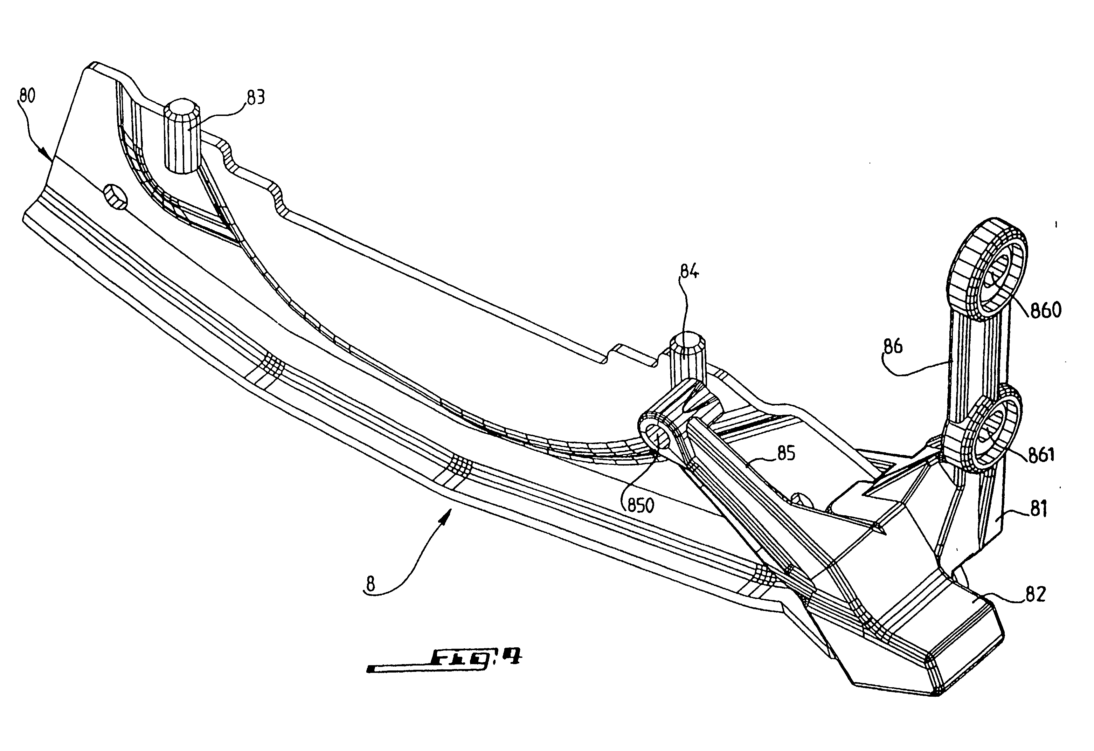

Par ailleurs, la figure 4 illustre de façon plus précise cette barre 8, la partie gauche du dessin correspondant à la partie de la barre 8 située à l'avant du véhicule lorsque la barre est fixée sur le groupe moto-propulseur 2 et la partie droite de cette figure 4 illustrant la partie de la barre 8 située vers l'arrière du véhicule, après son montage.

Cette barre 8 est relativement mince pour ne pas augmenter de façon trop importante le poids du véhicule.

Cependant, elle doit présenter une résistance suffisante dans la direction longitudinale, pour être sensiblement indéformable dans cette direction qui correspond à celle des efforts lors d'un choc avant sur le véhicule 1.

En cas de choc avant sur le véhicule, c'est la face avant 80 de la poutre 8 qui est susceptible de venir en contact avec un obstacle, après déformation des longerons 50, 51.

La face arrière 81 de la poutre 8 comporte une partie 82 formant nez qui est conçue pour être particulièrement résistante. C'est en effet cette partie 82 qui est susceptible de venir en contact avec le berceau en cas de choc avant, comme cela sera décrit ultérieurement.

Les figures 3 et 4 montrent que la barre 8 présente, dans cet exemple, un profil légèrement courbé. Pour certains types de groupe moto-propulseur, ce profil particulier permet de faciliter l'introduction de la barre 8 sous le groupe moto-propulseur 2.

En pratique, la barre 8 est positionnée sur le moteur 20 par l'intermédiaire notamment de deux pions de centrage 83, 84 qui sont situés sur la partie supérieure de la barre 8 dans la position montée de cette barre et qui s'insèrent dans des orifices (non représentés) ménagés dans le carter du moteur 20.

La fixation de la barre 8 sur le groupe moto-propulseur 2 est ici réalisée par l'intermédiaire de brides de fixation 85, 86 qui comportent des orifices 850, 860, 861 destinés à recevoir des moyens de fixation (non représentés) sur la boîte de vitesses 21.

Les figures 1 à 3 montrent que les dimensions de la barre 8 et son positionnement par rapport aux longerons 50 et 51 et au groupe moto-propulseur 2 sont choisis de telle sorte que la face avant 80 de la barre 8 soit en retrait vers l'arrière du véhicule par rapport aux faces avant 503, 513 des longerons 50, 51, cette face avant 80 étant, par contre, située en avant de la face avant 220 du groupe moto-propulseur 2.

Ainsi, la face avant de la barre 8 est située, dans une direction longitudinale, entre la face avant des longerons et la face avant du groupe moto-propulseur.

Par ailleurs, le nez 82 de la barre 8 est décalé vers l'avant par rapport au berceau 52 et plus précisément par rapport à sa face avant 528.

Ainsi, un espace libre est ménagé entre le nez 82 et la face avant 528 du berceau 52.

Les figures 1 à 3 montrent que des moyens de renforcement 529 sont fixés sur la face avant 528 du berceau 52, en regard du nez 82 de la barre 8. Ces moyens de renforcement peuvent notamment prendre la forme d'une cornière métallique.

On peut déjà noter ici que la barre 8 peut être adaptée sur tout type de groupes moto-propulseur classiques, sans qu'il soit nécessaire de les modifier. Le profil de la barre 8 est simplement adapté à la forme du groupe moto-propulseur concerné.

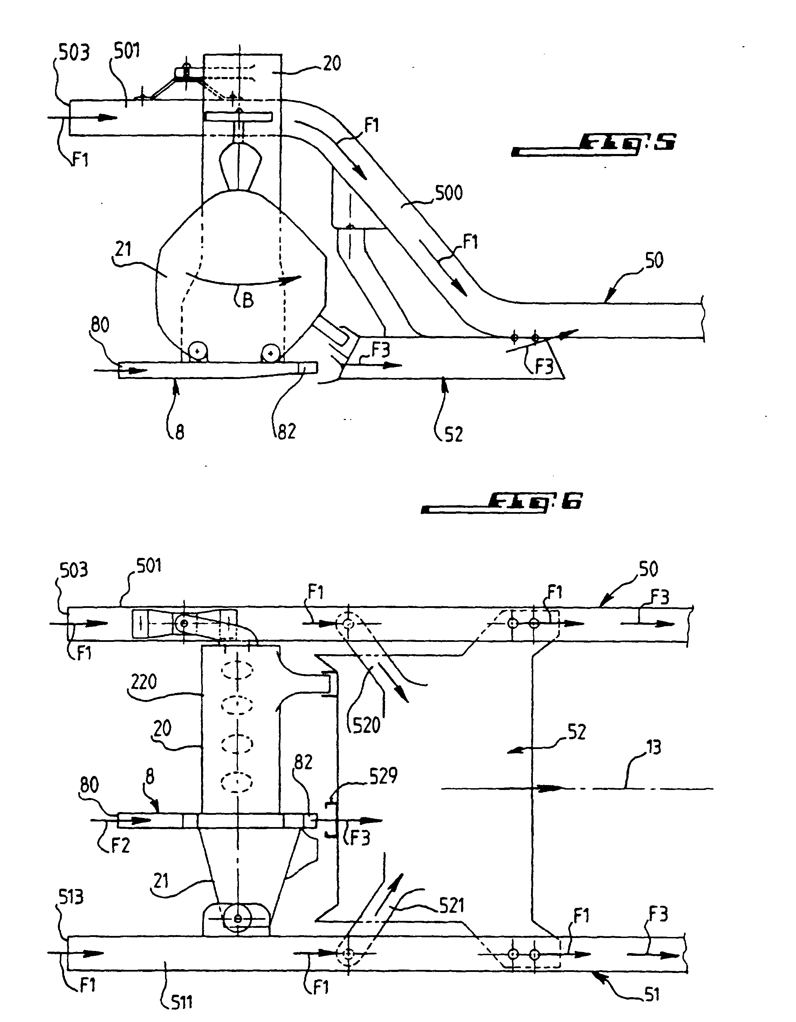

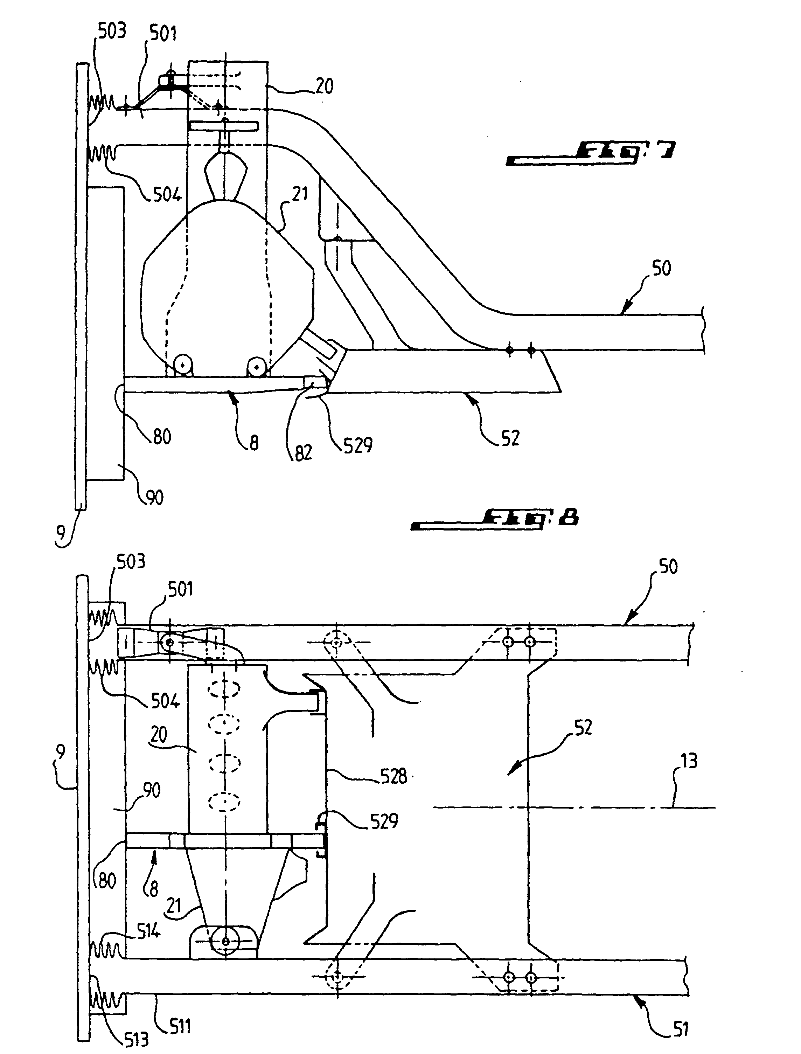

On se réfère maintenant aux figures 5 et 6 qui reprennent, de façon simplifiée, les figures 1 et 2 précédemment décrites.

Ainsi, ces figures illustrent la position relative des différents éléments constitutifs de la structure avant selon l'invention, avant tout choc avant sur le véhicule.

Sur les figures 5 et 6 sont cependant illustrés, au moyen de flèches, les trajets des efforts lors d'un choc avant. Ceci va être expliqué de façon plus précise, en référence aux figures 7 et 8 qui illustrent la position relative des différents éléments montrés aux figures 5 et 6, après un choc avant.

Dans l'exemple illustré aux figures 7 et 8, le choc sur l'avant du véhicule a été porté au cours d'un essai, la référence 9 désignant le mur de choc et la référence 90 une barrière déformable utilisée pour la simulation d'un choc.

Ainsi, le choc de la structure avant selon l'invention sur le mur 9 produit des efforts dans les longerons 50 et 51 qui se propagent longitudinalement, selon ces longerons (flèches F1).

Lorsque le choc est suffisamment important, les longerons se déforment. Les figures 7 et 8 montrent la partie 501, 511 du longeron 50, 51 avec une zone avant 504, 514 déformée vers l'arrière du véhicule.

Dans ce cas, l'obstacle sur lequel se produit le choc, ici la barrière 90, vient en contact avec la face avant 80 de la barre 8. Cette dernière est alors également soumise à des efforts longitudinaux, comme l'illustrent les figures 5 et 6 (flèches F2).

Ces efforts longitudinaux sur la barre 8 provoquent un mouvement de basculement du groupe moto-propulseur 2, autour de ses attaches de fixation sur les extrémités avant des longerons 50 et 51 (flèche B).

Le nez 82 de la barre 8 vient alors en contact avec la face avant 528 du berceau 52 et plus précisément avec les moyens de renforcement 529 fixés sur cette face avant.

Lorsque la barre 8 vient en contact avec le berceau 52, elle bloque sensiblement tout mouvement ultérieur de balancier du groupe moto-propulseur. En effet, elle agit comme une entretoise, entre la barrière 90 et le berceau 52.

Du fait du contact entre la barre 8 et le berceau 52, les efforts longitudinaux liés aux chocs sur l'avant du véhicule se propagent selon le berceau 52 puis sur les longerons 50 (flèches F3).

La barre 8 conserve cette fonction d'entretoise puisqu'elle est conçue pour être pratiquement indéformable dans la direction longitudinale.

Ainsi, la présence de cette barre 8 limite considérablement le mouvement de balancier du groupe moto-propulseur, ce qui évite tout risque d'intrusion du groupe moto-propulseur dans l'habitacle du véhicule, en cas de choc avant.

Par ailleurs, la barre 8 permet de reprendre sensiblement tous les efforts auxquels le groupe moto-propulseur serait soumis en l'absence de cette barre et ceci, sans que le moteur 20 et la boîte de vitesses 21 soient renforcés. Ceci permet donc d'utiliser des carters de moteur et de boîte de vitesses standards.

Par ailleurs, la présence de la barre 8 permet de contrôler le trajet des efforts lors d'un choc avant sur le véhicule et également d'équilibrer les efforts entre les extrémités avant des longerons et le berceau.

Dans l'ensemble de la description, les termes avant, arrière, haut, bas, droit, gauche, longitudinal et transversal ont été utilisés par référence au véhicule automobile équipé de la structure avant selon l'invention.

Les signes de référence insérés après les caractéristiques techniques figurant dans les revendications ont pour seul but de faciliter la compréhension de ces dernières et ne sauraient en limiter la portée.

## Revendications

1. Structure avant de véhicule automobile comprenant un brancard (5) solidaire de l'habitacle du véhicule et constitué de deux longerons (50, 51) symétriques par rapport au plan médian (13) du véhicule et reliés par un berceau (52) court, les extrémités avant des longerons étant courbées et relevées et supportant les attaches de fixation (200, 211) du groupe moto-propulseur (2) et comprenant une barre (8) s'étendant longitudinalement, sensiblement parallèle aux longerons (50, 51), qui est fixée sur le groupe moto-propulseur (2), avec sa face avant (80) située entre la face avant (503, 513) des longerons (50, 51) et la face avant (200) du groupe moto-propulseur (2) **caractérisée en ce que** la face arrière (81) de la barre (8) est située en vis-à-vis du berceau (52), cette barre (8) étant sensiblement indéformable longitudinalement, de telle sorte qu'en cas de choc avant sur le véhicule, les longerons (50, 51) se déforment et la barre (8) vient en contact, par sa face arrière, sur le berceau (52) et bloque sensiblement tout mouvement ultérieur de balancier du groupe moto-propulseur (2).

2. Structure avant selon la revendication 1, **caractérisée en ce que** ladite barre (8) comporte sur sa face arrière (81), une partie formant nez (82) qui est destinée à venir en contact avec le berceau.

3. Structure avant selon la revendication 1 ou 2, **caractérisée en ce que** ladite barre (8) présente un profil légèrement courbé pour faciliter son introduction sous le groupe moto-propulseur avant son montage sur celui-ci.

4. Structure avant selon l'une des revendications 1 à 3, **caractérisée en ce que** la partie du berceau en vis-à-vis de la barre (8) est renforcée, afin de transmettre une partie de l'énergie aux longerons (50, 51) par l'intermédiaire du berceau.

5. Structure avant selon l'une des revendications 1 à 4, **caractérisée en ce que** les attaches du groupe moto-propulseur (2) sont fixées sur les extrémités avant des longerons (50, 51) par l'intermédiaire de cales élastiques (201, 211).

6. Structure avant selon l'une des revendications 1 à 5, **caractérisé en ce que** ladite barre (8) comporte des moyens de fixation (85, 86) sur la boîte de vitesses et des pions de centrage (83, 84) sur le moteur (20).

7. Véhicule automobile équipé d'une structure avant selon l'une quelconque des revendications précédentes.

## Patentansprüche

1. Kraftfahrzeugvorderbau mit einem Tragwerk (5), das fest mit dem Fahrgastraum des Fahrzeugs verbunden ist und aus zwei zur Mittelebene (13) des Fahrzeugs symmetrisch verlaufenden Längsträgern (50, 51) besteht, die über einen kurzen Motorträger (52) verbunden sind, wobei die Vorderenden der Längsträger gekrümmt und angehoben sind und Befestigungen (200, 211) der Motorantriebseinheit (2) tragen, und mit einer Stange (8), die in Längsrichtung im wesentlichen parallel zu den Längsträgern (50, 51) verläuft und an der Motorantriebseinheit (2) mit ihrer Vorderseite (80) befestigt ist, die sich zwischen der Vorderseite (503, 513) der Längsträger (50, 51) und der Vorderseite (200) der Motorantriebseinheit (2) befindet, **dadurch gekennzeichnet, dass** die Hinterseite (81) der Stange (8) dem Motorträger (52) gegenüberliegt, wobei diese Stange (8) in Längsrichtung im wesentlichen unverformbar ist, so dass im Falle eines Stoßes von vorne auf das Fahrzeug die Längsträger (50, 51) sich verformen und die Stange (8) mit ihrer Hinterseite am Motorträger (52) in Kontakt gelangt und im wesentlichen jegliche nachfolgende Schwenkbewegung der Motorantriebseinheit (2) blockiert.

2. Vorderbau nach Anspruch 1, **dadurch gekennzeichnet, dass** die genannte Stange (8) an ihrer Hinterseite (81) einen Nasenteil (82) enthält, der dazu bestimmt ist, mit dem Motorträger in Kontakt zu gelangen.

3. Vorderbau nach Anspruch 1 oder 2, **dadurch gekennzeichnet, dass** die genannte Stange (8) ein leicht gekrümmtes Profil aufweist, um deren Einführen unter die Motorantriebseinheit vor deren Montieren an dieser erleichtert.

4. Vorderbau nach einem der Ansprüche 1 bis 3, **dadurch gekennzeichnet, dass** ein der Stange (8) gegenüberliegender Teil des Motorträgers verstärkt ist, um einen Teil der Energie über den Motorträger auf die Längsträger (50, 51) zu übertragen.

5. Vorderbau nach einem der Ansprüche 1 bis 4, **dadurch gekennzeichnet, dass** die Befestigungen der Motorantriebseinheit (2) an den Vorderenden der Längsträger (50, 51) über Federkeile (201, 211) fixiert sind.

6. Vorderbau nach einem der Ansprüche 1 bis 5, **dadurch gekennzeichnet, dass** die genannte Stange (8) Mittel (85, 86) zum Befestigen am Getriebe und Zapfen (83, 84) zum Zentrieren am Motor (20) enthält.

7. Kraftfahrzeug, das mit einem Vorderbau nach einem der vorangehenden Ansprüche ausgestattet ist.

## Claims

1. Front structure of a motor car comprising a shaft (5) which is integrated into the passenger compartment of the vehicle and made up of two side members (50, 51), which are symmetrical in relation to the median plane (13) of the vehicle and connected by a short support (52), the front ends of the side members being curved and raised and supporting the fixing connections (200, 211) of the power unit (2) and comprising a bar (8) extending longitudinally, more or less parallel to the side members (50, 51), which is fixed to the power unit (2) with its front face (80) situated between the front face (503, 513) of the side members (50, 51) and the front face (200) of the power unit (2), **characterised by** the fact that the rear face (81) of the bar (8) is situated opposite the support (52), this bar (8) being more or less longitudinally non-deformable, so that if there is a front impact to the vehicle, the side members (50, 52) are deformed and the rear face of the bar (8) comes into contact with the support (52) and more or less stops any subsequent movement of the balance bar of the power unit (2).

2. Front structure according to claim 1, **characterised by** the fact that the rear face (81) of the said bar (8) has a part forming a nose (82) which is intended to come into contact with the support.

3. Front structure according to claim 1 or 2, **characterised by** the fact that the said bar (8) has a slightly curved profile to facilitate it being put under the power unit before it is fitted to it.

4. Front structure according to one of claims 1 to 3, **characterised by** the fact that the part of the support opposite the bar (8) is reinforced in order to transmit part of the energy to the side members (50, 51) by means of the support.

5. Front structure according to one of claims 1 to 4, **characterised by** the fact that the connections of the power unit (2) are fixed to the front ends of the side members (50, 51) by means of flexible shims (201, 211).

6. Front structure according to one of claims 1 to 5, **characterised by** the fact that the said bar (8) has means of fixing (85, 86) to the gearbox and guide pins (83, 84) on the engine (20).

7. Motor car equipped with a front structure according to any one of the previous claims.
